# EUROPÄISCHE PATENTANMELDUNG

(11) **EP 4 477 456 A1**
(43) Veröffentlichungstag der Anmeldung: **18.12.2024**
(21) Anmeldenummer: 24175275.7
(22) Anmeldetag: 10.05.2024
(51) Int. Cl.: B60L 53/30, B60L 53/35, B60L 53/18, H02G 11/00, H02G 3/04, B60L 53/31, B60L 53/16, B60L 53/68, H02G 11/02

(54) **VORRICHTUNG ZUM TRANSPORTIEREN EINES LADEKABELS ZUM LADEN EINES FAHRZEUGS, AUFWEISEND BEDIENELEMENT**

(30) Priorität: 14.06.2023 DE 102023205522
(71) Anmelder: Siemens Aktiengesellschaft, 80333 München (DE)
(72) Erfinder: Perras, Stefan, 82223 Eichenau (DE); Völkl, Albert, 80687 München (DE)
(74) Vertreter: Siemens Patent Attorneys

(57) **Zusammenfassung**

Die vorliegende Erfindung betrifft eine Vorrichtung (100) zum Steuern eines Ladekabels (101) zum Laden eines Fahrzeugs (150). Die Vorrichtung (100) weist eine Trägerstruktur (103), welche an einer Ladezone (104) zum Laden eines Fahrzeugs (150) angeordnet ist, und ein Ladekabel (101) auf, welches an eine Elektrizitätsquelle anschließbar ist und einen Ladestecker (102) zum Anstecken an einem zu ladenden Fahrzeug (150) aufweist, wobei das Ladekabel (101) an der Trägerstruktur (103) befestigt ist. Ferner weist die Vorrichtung eine Kabeltransportvorrichtung (110) mit einem Kabeltransportelement (111) auf, welches mit dem Ladekabel (101) derart gekoppelt ist, dass das Ladekabel (101) relativ zur Trägerstruktur (103) bewegbar ist. Die Kabeltransportvorrichtung (110) weist ferner ein Bedienelement (106) auf, welches mit dem Kabeltransportelement (111) derart gekoppelt ist, dass Steuerbefehle zum Steuern des Kabeltransportelements (111) von einem Benutzer (109) eingebbar sind, um den Ladestecker (102) in der Ladezone (104) zu positionieren.

## Beschreibung

### Technisches Gebiet

Die vorliegende Erfindung betrifft eine Vorrichtung und ein Verfahren zum Transportieren eines Ladekabels zum Laden eines Fahrzeugs.

### Hintergrund der Erfindung

Neben der Elektrifizierung von kleineren Fahrzeugen, wie beispielsweise PKW, ist ebenfalls die Elektrifizierung von Nutzfahrzeugen, wie beispielsweise Lastkraftwagen, möglich. Der Betrieb von Nutzfahrzeugen ist sehr kostengetrieben, weshalb bei deren Elektrifizierung zusätzliche Standzeiten durch Ladepausen für die Hochvoltbatterie vermieden werden müssen. Aus diesem Grund ist es vorteilhaft, beispielsweise an den Be- und Entladeplätzen von LKW Ladeinfrastruktur aufzubauen. Da in LKW- bzw. Busdepots häufig wenig Platz ist um zu rangieren, ist es schwierig, konventionelle Ladesäulen oder Ladeverteiler (Dispenser) fest im Boden zu verankern. Die Gefahr der Beschädigung durch Rangiermanöver und damit des Ausfalls der Ladepunkte ist zu groß.

Eine Möglichkeit, das Risiko von Beschädigungen zu reduzieren, ist die Anbringung des Dispensers in ausreichendem Abstand über der Fahrbahn. Das Kabelmanagement der Ladekabel stellt in diesem Fall jedoch eine besondere Herausforderung dar, da der Ladestecker des Ladekabels oder der LKW selbst nicht beim Rangieren beschädigt werden soll. Es bietet sich daher an, das Ladekabel nach dem Ladevorgang außerhalb bzw. in ausreichendem Abstand von einer Ladezone zu positionieren. Die Positionierung eines Ladekabels alleine durch den Benutzer ist jedoch problematisch, da das Ladekabel ein hohes Gewicht hat sowie oftmals durch die Umgebung stark verschmutzt ist.

### Darstellung der Erfindung

Es ist eine Aufgabe der vorliegenden Erfindung, Techniken einzuführen, die einen einfachen Transport eines Ladekabels erlauben.

Diese Aufgabe wird durch eine Vorrichtung und ein Verfahren zum Transportieren eines Ladekabels zum Laden eines Fahrzeugs gemäß den unabhängigen Ansprüchen gelöst.

Gemäß einem ersten Aspekt wird eine Vorrichtung zum Transportieren eines Ladekabels zum Laden eines Fahrzeug beschrieben. Die Vorrichtung weist eine Trägerstruktur, welche dazu ausgebildet ist, an einer Ladezone zum Laden eines Fahrzeugs angeordnet zu werden, und ein Ladekabel auf, welches mit einer Elektrizitätsquelle verbunden oder verbindbar ist und einen Ladestecker zum Anstecken an ein zu ladendes Fahrzeug aufweist, wobei das Ladekabel an der Trägerstruktur befestigt ist. Ferner weist die Vorrichtung eine Kabeltransportvorrichtung mit einem Kabeltransportelement auf, welches mit dem Ladekabel gekoppelt und dazu ausgebildet ist, das Ladekabel relativ zur Trägerstruktur zu bewegen. Die Kabeltransportvorrichtung weist ferner ein Bedienelement auf, welches mit dem Kabeltransportelement gekoppelt und dazu ausgebildet ist, Steuerbefehle zum Steuern des Kabeltransportelements von einem Benutzer entgegenzunehmen. Die Kabeltransportvorrichtung ist dabei dazu ausgebildet, den Ladestecker in der Ladezone in Abhängigkeit von den entgegengenommenen Steuerbefehlen zu bewegen.

Gemäß einem weiteren Aspekt wird ein Verfahren zum Transportieren eines Ladekabels zum Laden eines Fahrzeugs mit der oben beschriebenen Vorrichtung präsentiert. Das Verfahren weist ein Positionieren des Ladesteckers in der Ladezone, basierend auf in das Bedienelement eingegebene Steuerbefehle zum Steuern des Kabeltransportelements, auf.

Das Fahrzeug kann dabei ein elektrisch betriebenes Fahrzeug, beispielsweise ein rein elektrisch betriebenes Fahrzeug oder ein Hybridfahrzeug, darstellen, welches einen wiederaufladbaren Akkumulator aufweist. Das Fahrzeug weist insbesondere eine Ladebuchse auf, an welcher der Ladestecker des Ladekabels einsteckbar ist. Das Fahrzeug ist beispielsweise ein elektrisch betriebener Pkw oder ein Nutzfahrzeug, wie beispielsweise ein Lkw, ein Bus, eine Baumaschine oder eine Landkraftmaschine.

Die Ladezone beschreibt einen Bereich des Bodens, in welchem das Ladekabel bewegt werden kann, um an das Fahrzeug gekoppelt zu werden und entsprechend das Fahrzeug zu laden. Die Ladezone weist dabei eine vorbestimmte Fläche am Boden auf, wobei in der Ladezone ein Anstecken des Ladesteckers an dem Fahrzeug möglich ist. Gleichzeitig kann die Ladezone dazu vorgesehen sein, das Fahrzeug mit zu transportierenden Waren zu beladen beziehungsweise transportierte Waren aus dem Fahrzeug zu entladen.

Die Trägerstruktur dient zum Befestigen der Vorrichtungskomponenten an einem Gebäude oder an einem Boden. Die Trägerstruktur trägt insbesondere das Ladekabel. Ferner kann an der Trägerstruktur die Kabeltransportvorrichtung mit dem entsprechenden Kabeltransportelement vorgesehen werden. Außerdem können Sensorelemente der Sensorvorrichtung zum Detektieren der Ladesituation angeordnet werden. In einer weiteren beispielhaften Ausführungsform ist an der Trägerstruktur eine Elektrizitätsquelle und/oder ein Ladeverteiler (Dispenser) angeordnet, an welchen das Ladekabel gekoppelt ist. Die Trägerstruktur ist beispielsweise als Bodenstütze oder als Querbalken ausgebildet.

Die Kabeltransportvorrichtung weist ein oder mehrere Kabeltransportelemente auf. Das Kabeltransportelement ist mit dem Ladekabel gekoppelt und dazu ausgebildet, das Ladekabel relativ zur Trägerstruktur zu bewegen. Das Kabeltransportelement ist vorzugsweise dazu ausgebildet, Bereiche des Ladekabels, insbesondere den Ladestecker, von außerhalb in die Ladezone zu befördern. Das Kabeltransportelement kann, wie im Folgenden beschrieben, eine Steuerstange darstellen, welche schwenkbar zum Beispiel an der Trägerstruktur befestigt ist. Ferner kann die Steuerstange in ihrer Länge einstellbar sein. In einer weiteren, im Folgenden beschriebenen beispielhaften Ausführungsform kann die Kabeltransportvorrichtung eine Seilzugvorrichtung und das Kabeltransportelement beispielsweise ein Trägerseil darstellen. Ferner kann als Kabeltransportelement eine Seilwinde zum Aufrollen des Ladekabels vorgesehen werden.

Das Bedienelement stellt eine Eingabemöglichkeit dar, so dass ein Benutzer Steuerbefehle zum Steuern des Kabeltransportelements eingeben kann. Das Bedienelement kann hierfür eine Vielzahl verschiedener mechanischer Eingabemöglichkeiten aufweisen, wie beispielsweise Knöpfe, Schieber oder Schalter. Ferner kann das Bedienelement einen berührungsempfindlichen (beispielsweise kapazitiven oder resistiven) Bildschirm (Touchscreen) aufweisen, um Steuerbefehle von einem Benutzer entgegenzunehmen.

Die Kabeltransportvorrichtung ist in Abhängigkeit von den Steuerbefehlen steuerbar. Die Steuerbefehle geben beispielsweise die Seillänge des Ladekabels vor oder geben Positionsdaten oder Bewegungsdaten für eine Steuermechanik des Kabeltransportelements vor. Diese Daten können absolute Werte oder relativ zu einer aktuellen Position bestimmte Werte sein.

Befindet sich das Fahrzeug in der Ladezone, kann der Benutzer das Bedienelement betätigen, um die Kabeltransportvorrichtung zu steuern und so den Ladestecker in die Nähe der Ladebuchse des Fahrzeugs zu bewegen bzw. zu positionieren. Nach dem Ladevorgang kann der Benutzer mittels des Bedienelements die Kabeltransportvorrichtung entsprechend steuern, um das Ladekabel bzw. den Ladestecker von dem Fahrzeug zu entfernen, so dass ein Ausfahren des Fahrzeugs aus der Ladezone bei wenigstens reduziertem Risiko einer Beschädigung des Ladekabels erfolgen kann.

Mit der vorliegenden Erfindung wird es ermöglicht, dass der Benutzer ohne eigene Muskelkraft und ohne direkten Kontakt mit dem Ladekabel bzw. dem Ladestecker diesen in der Nähe des Fahrzeugs positionieren kann. Somit werden selbst Ladekabel großer Länge und großer Durchmesser trotz eines entsprechend großen Gewichts einfach handhabbar.

Gemäß einer weiteren beispielhaften Ausführungsform ist das Bedienelement an der Trägerstruktur angeordnet. Das Bedienelement ist somit ein stationäres Bauteil, welches fixiert ist und immer an derselben Stelle vorliegt. Beispielsweise kann die Trägerstruktur eine Bodenstütze bzw. eine Ladesäule darstellen, an welcher das Bedienelement ergonomisch günstig angeordnet ist, damit ein Benutzer das Bedienelement einfach bedienen kann.

Gemäß einer weiteren beispielhaften Ausführungsform ist das Bedienelement an dem Ladekabel, insbesondere an dem Ladestecker, angeordnet. Somit bewegt sich das Bedienelement zusammen mit dem Ladestecker. Der Benutzer kann den Ladestecker greifen und diesen über das angebrachte Bedienelement unter Aufwendung nur geringer Körperkraft in seiner Position steuern. Der Benutzer kann somit das Bedienelement zusammen mit dem Ladestecker bis zu einer gewünschten Position führen, wobei die Bewegungskräfte vollständig bzw. nahezu vollständig durch die Kabeltransportvorrichtung und nicht durch den Benutzer generiert werden. Der Benutzer gibt lediglich entsprechende Steuerbefehle über das Bedienungselement ein. Alternativ kann das Bedienungselement als Kraftsensor dazu ausgebildet sein, von dem Benutzer auf das Ladekabel ausgeübte Zugkräfte zu detektieren und als Steuerbefehle entgegenzunehmen. In diesem Fall fungiert die erfindungsgemäße Vorrichtung als eine Servoautomatik und führt das Ladekabel automatisch in Richtung der vom Benutzer ausgeübten Zugkräfte nach.

Gemäß einer weiteren beispielhaften Ausführungsform weist die Kabeltransportvorrichtung eine Empfangseinrichtung zum drahtlosen Empfangen der Steuerbefehle von dem Bedienelement auf, wobei das Bedienelement eine Sendeeinrichtung aufweist zum Übertragen der vom Benutzer eingegebenen Steuerbefehle zu der Empfangseinrichtung. Das Bedienelement und die Kabeltransportvorrichtung sind somit zum drahtlosen Datenaustausch konfiguriert. Das Bedienelement kann entfernt von der Kabeltransportvorrichtung angeordnet werden, ohne dass eine kabelgebundene Verbindung notwendig wäre. Beispielsweise können zum drahtlosen Datenaustausch verschiedene Übertragungstechniken, wie beispielsweise NFC (Near Field Communication), WLAN (Wireless Local Area Network) oder Bluetooth Übertragungsstandards, eingesetzt werden.

Gemäß einer weiteren beispielhaften Ausführungsform kann das Bedienelement entsprechend drahtlos an die Kabeltransportvorrichtung zum Übertragen der Steuerbefehle koppelbar sein. In einer weiteren beispielhaften Ausführungsform kann als Bedienelement ein Computer, ein Smartphone und/oder ein Tablet-Computer verstanden werden. Beispielsweise kann eine entsprechende Softwareapplikation (App) auf dem Bedienelement installiert werden, um Steuerbefehle für die Kabeltransportvorrichtung entgegenzunehmen.

Gemäß einer weiteren beispielhaften Ausführungsform weist das Bedienelement ein Anzeigeelement auf, welches konfiguriert ist, Informationen bezüglich der Ist-Position des Ladesteckers anzugeben und/oder Informationen bezüglich des Ladezustands des Ladekabels anzuzeigen. Das Anzeigeelement kann beispielsweise Informationsleuchten, beispielsweise LEDs, aufweisen, um bestimmte Informationen dem Benutzer anzuzeigen. Insbesondere kann das Anzeigeelement ein Bildschirm sein, auf welchem beispielsweise die Position des Ladesteckers in Bezug auf die Ladezone bzw. das Fahrzeug dargestellt wird, insbesondere in Echtzeit.

Hierzu kann die Vorrichtung beispielsweise eine Sensorvorrichtung aufweisen, welche mittels wenigstens einem von verschiedenen Sensoren (optische Sensoren, Kameras, Berührungssensoren, etc.) die Position und Ausrichtung des Fahrzeugs und entsprechend dessen Ladebuchse bestimmt und diese Anzeigeinformationen an das Bedienelement zum Anzeigen auf dem Anzeigeelement überträgt.

Das Anzeigeelement kann ferner Informationen über den Ladezustand anzeigen, beispielsweise, ob ein Stromfluss bzw. ein Ladevorgang aktiv ist oder wie der aktuelle Ladezustand der zu ladenden Batterie ist.

Gemäß einer weiteren beispielhaften Ausführungsform ist das Bedienelement mit einer Elektrizitätsquelle zum Laden des Fahrzeugs drahtlos oder drahtgebunden derart koppelbar, dass Steuerbefehle zum Steuern eines Ladevorgangs mittels des Bedienelements von dem Benutzer eingebbar sind. Die Elektrizitätsquelle kann beispielsweise einen Ladeverteiler (Dispenser) darstellen. Neben der Steuerfunktion der Position des Ladesteckers kann das Bedienelement somit ebenfalls eine Steuerfunktion bezüglich des Ladevorgangs aufweisen. Beispielsweise kann das Bedienelement Steuerbefehle bezüglich des Beginns und der Beendigung eines Ladevorgangs an die Elektrizitätsquelle bzw. an eine zwischengeschaltete Steuereinheit senden.

Gemäß einer weiteren beispielhaften Ausführungsform weist das Bedienelement ein Piezoelement auf, welches konfiguriert ist, mittels Betätigung durch den Benutzer ein Steuersignal, insbesondere ohne zusätzliche Energiebereitstellung, zu erzeugen. Das Bedienelement weist beispielsweise einen Schalter auf, welcher die mechanische Energie auf das Piezo-Element überträgt, so dass das Piezo-Element die mechanische Energie in elektromagnetische Energie bzw. elektromagnetische Wellen umwandelt. Basierend darauf können Steuersignale erzeugt werden, die an die Kabeltransportvorrichtung übertragen werden können. Eine zusätzliche Versorgungsbatterie für das Bedienelement ist somit unnötig.

Gemäß einer weiteren beispielhaften Ausführungsform bildet das Kabeltransportelement eine Steuerstange aus, welche längsverstellbar ausgebildet ist und/oder welche derart schwenkbar ist, dass das Ladekabel in die Ladezone hinein- und herausschwenkbar ist. Beispielsweise kann das Ladekabel an einem oder mehreren Befestigungspunkten an die Steuerstange gekoppelt werden. Zwischen den einzelnen Befestigungspunkten kann das Ladekabel Schlaufen aufweisen. Ist die Steuerstange beispielsweise in ihrer Länge reduziert, so sind große und enge Schlaufen zwischen den Befestigungspunkten existent. Wenn die Steuerstange zu ihrer Maximallänge ausgezogen ist, kann das Ladekabel zwischen den Befestigungspunkten gespannt vorliegen. Die Steuerstange kann beispielsweise einklappbar oder teleskopartig einfahrbar ausgebildet sein.

Ferner kann die Steuerstange mittels eines Scharniers schwenkbar beispielsweise an der Trägerstruktur befestigt werden, um somit das Ladekabel in die Ladezone hinein- oder hinauszuschwenken. Die Längenveränderung bzw. das Schwenken der Steuerstange kann beispielsweise mittels eines elektrischen Aktuators vorgenommen werden.

Das Bedienelement ist dabei dazu konfiguriert, Steuerbefehle bezüglich eines Schwenkens und/oder bezüglich einer Länge der Steuerstange entgegenzunehmen.

Gemäß einer weiteren beispielhaften Ausführungsform weist das Kabeltransportelement eine Seilwinde auf, die dazu ausgebildet ist, das Ladekabel aufzurollen oder abzurollen, wobei das Bedienelement dazu konfiguriert ist, Steuerbefehle bezüglich eines Aufrollens oder Abrollens des Ladekabels entgegenzunehmen. Die Seilwinde ist insbesondere eine elektrisch antreibbare Seilwinde. Entsprechend können Steuersignale von dem Bedienelement an die Seilwinde übertragen werden und das Ladekabel aufgerollt oder abgerollt werden. Insbesondere ist die Seilwinde in einem Querbalken montiert, welcher beabstandet vom Boden quer über diesem verläuft. Insbesondere ist der Querbalken derart über dem Boden montiert, dass das zu ladende Fahrzeug zwischen dem Boden und dem Querbalken positioniert werden kann. Entsprechend wird beim Abrollen des Ladekabels der Ladestecker vertikal von oben nach unten herabgelassen, bis der Benutzer den Ladestecker greifen und in die Ladebuchse des Fahrzeugs einstecken kann. Nach dem Ladevorgang kann der Benutzer über das Bedienelement die Seilwinde betätigen, so dass das Ladekabel aufgerollt wird und der Ladestecker nach oben vom Boden weg bewegt werden kann. Somit kann der Ladestecker außerhalb des Gefahrenbereichs positioniert werden, so dass beim Rangieren des Fahrzeugs eine Kollision mit dem Ladestecker oder dem Ladekabel vermieden werden kann.

Gemäß einer weiteren beispielhaften Ausführungsform ist die Kabeltransportvorrichtung an der Trägerstruktur befestigt. Ferner weist die Kabeltransportvorrichtung eine Seilzugvorrichtung auf, welche ein Trägerseil als Kabeltransportelement aufweist. Das Trägerseil ist zwischen einem Aufhängepunkt des Ladekabels und der Trägerstruktur befestigt, wobei die Seilzugvorrichtung dazu ausgebildet ist, eine freie Länge des Trägerseils einzustellen, dass ein Abstand des ersten Aufhängepunkts zum Boden variabel vorgebbar ist. Das Bedienelement ist mit der Seilzugvorrichtung gekoppelt und dazu ausgebildet, Steuerbefehle bezüglich der freien Länge des Trägerseils entgegenzunehmen. Insbesondere kann mit dem Bedienelement die Seilzugvorrichtung, welche beispielsweise eine elektrische Seilwinde aufweist, auf welcher das Ladekabel aufgerollt ist, steuern und somit die gewünschte Position des Ladesteckers in der Ladezone eingestellt werden.

Die Seilzugvorrichtung ist an der Trägerstruktur, aufweisend beispielsweise ein Querträger, welcher quer über die Ladezone verläuft, befestigt und weist das Trägerseil auf, welche das Ladekabel an dem Aufhängepunkt befestigt. Mit anderen Worten hängt das Ladekabel an dem Trägerseil von der Trägerstruktur herab. Das Trägerseil kann an dem ersten Aufhängepunkt beispielsweise lösbar oder unlösbar mit dem Ladekabel befestigt sein. Die Aufhängepunkte definieren den Abschnitt bzw. Punkt, an welchem die entsprechenden Trägerseile an dem Ladekabel befestigt sind.

Die Trägerseile können beispielsweise aus Kunststoff oder aus natürlichen Materialien, wie beispielsweise aus Hanf hergestellt werden. Ferner kann im Rahmen der vorliegenden Erfindung ebenfalls eine Kette, beispielsweise aus Metall, oder ein Band bzw. Riemen ein Trägerseil darstellen.

Über die Einstellung der freien Seillängen der Trägerseile wird der Abstand zum Boden individuell eingestellt. Somit kann in einem inaktiven Zustand, in welchem kein Fahrzeug in der Ladezone positioniert ist, der Aufhängepunkt in Richtung Trägerstruktur mittels des Bedienelements eingestellt werden, so dass das Ladekabel bodenfern in der Nähe der Trägerstruktur vorliegt. Nachdem ein Fahrzeug insbesondere unter der Trägerstruktur rangiert hat und an einer vorbestimmten Position bzw. Ladeposition relativ zur Trägerstruktur positioniert ist, kann die Seillänge des Trägerseils mittels Steuerung durch das Bedienelement gezielt vergrößert werden, so dass ein Benutzer den Ladestecker greifen kund in die Ladebuchse des Fahrzeugs einstecken kann.

Gemäß einer weiteren beispielhaften Ausführungsform weist die Kabeltransportvorrichtung eine weitere Seilzugvorrichtung auf, welche ein weiteres Trägerseil als Kabeltransportelement aufweist, wobei die weitere Seilzugvorrichtung an der Trägerstruktur beabstandet von der Seilzugvorrichtung befestigt ist. Das weitere Trägerseil ist zwischen einem weiteren Aufhängepunkt des Ladekabels, welcher beabstandet von dem Aufhängepunkt ausgebildet ist, und der Trägerstruktur befestigt, wobei die Seilzugvorrichtung und die weitere Seilzugvorrichtung jeweils dazu ausgebildet sind, die freien Längen des Trägerseils und des weiteren Trägerseils unabhängig voneinander einzustellen, so dass ein jeweiliger Abstand des Aufhängepunkts und des weiteren Aufhängepunkts zum Boden variabel vorgebbar ist. Das Bedienelement ist mit der weiteren Seilzugvorrichtung gekoppelt und dazu ausgebildet, Steuerbefehle bezüglich der freien Länge des weiteren Trägerseils entgegenzunehmen.

Gemäß der beispielhaften Ausführungsform sind die Trägerseile beabstandet voneinander an der Trägerstruktur befestigt und halten entsprechende Abschnitte des Ladekabels an beabstandeten Aufhängepunkten. Jedes der Trägerseile kann den Abstand zwischen dem entsprechenden Aufhängepunkt und der Trägerstruktur individuell einstellen. Bei einer Anordnung mit zwei Seilzugvorrichtungen verläuft das Ladekabel zunächst von einem Kopplungspunkt an der Trägerstruktur zur Seilzugvorrichtung, bzw. zu einer Kopplung an dem einen Aufhängepunkt. Von dort verläuft das Ladekabel zu der weiteren Seilzugvorrichtung, bzw. zu dem weiteren Aufhängepunkt an dem weiteren Trägerseil. Von dem zweiten Aufhängepunkt verläuft das Ladekabel weiter bis zu seinem Ende, an welchem der Ladestecker angeordnet ist. In einer weiteren beispielhaften Ausführungsformkönnen nach dem zweiten Aufhängepunkt noch weitere Seilzugvorrichtungen mit weiteren Aufhängepunkten vorgesehen werden.

Entsprechend ist die Seilzugvorrichtung mit dem weiteren Trägerseil an dem Ladekabel in dem weiteren Aufhängepunkt, lösbar oder unlösbar, befestigt, so dass das Ladekabel mit dem weiteren Trägerseil an der Trägerstruktur aufgehängt ist. Je nach Position und Ausrichtung des Fahrzeugs in der Ladezone kann die Kabeltransportvorrichtung die Längen der Trägerseile einstellen, so dass nicht nur eine vertikale, sondern auch eine horizontale Position des Ladesteckers automatisch eingestellt werden kann.

Gemäß einer weiteren beispielhaften Ausführungsform verläuft das Ladekabel von einem Kopplungspunkt mit der Trägerstruktur aus zu dem Aufhängepunkt und anschließend zu dem weiteren Aufhängepunkt, wobei das Ladekabel derart an der Trägerstruktur, der Seilzugvorrichtung und der weiteren Seilzugvorrichtung angeordnet ist, dass entlang einer horizontalen Richtungskomponente der Kopplungspunkt zwischen dem Aufhängepunkt und dem weiteren Aufhängepunkt vorliegt.

Mit anderen Worten hängt das Ladekabel zunächst von dem Kopplungspunkt von der Trägerstruktur herunter. Anschließend verläuft das Ladekabel zu dem ersten Aufhängepunkt, bildet eine Schlaufe und verläuft in Gegenrichtung zu dem zweiten Aufhängepunkt. Der Bereich des Ladekabels zwischen dem Kopplungspunkt und dem zweiten Aufhängepunkt bildet somit einen C-förmigen Verlauf. Der Bereich der Schlaufe am ersten Aufhängepunkt kann flexibel in Richtung Boden verstellt werden. Entsprechend kann auch der Bereich am Ladestecker bzw. am zweiten Aufhängepunkt flexibel in Richtung Boden verstellt werden. Je nachdem, wie die Längenverhältnisse zwischen dem ersten Tragseil und dem zweiten Tragseil ausgebildet sind, kann die Form des Seilverlaufs des Ladekabels eingestellt werden. Da die Trägerseile verschiebefest, d. h. nicht entlang des Ladekabels verschiebbar, angeordnet sind, ändert eine unterschiedliche Einstellung der Seillängen der Trägerseile nicht nur eine vertikale Position der Aufhängepunkte über dem Boden, sondern ebenfalls eine horizontale Position der Aufhängepunkte und entsprechend des Ladesteckers. Mit dem beschriebenen Ausführungsbeispiel kann somit neben einer vertikalen Position ebenfalls eine horizontale Position des Ladesteckers eingestellt werden, ohne dass eine hohe Muskelkraft des Benutzers notwendig ist und ohne, dass das Fahrzeug exakt an einer vorbestimmten Position zum Laden positioniert werden muss.

Gemäß einer weiteren beispielhaften Ausführungsform weist die Seilzugvorrichtung eine elektrisch steuerbare Seilwinde auf, wobei die Seilwinde basierend auf der detektierten Ladesituation steuerbar ist. Damit wird insbesondere die Länge des entsprechenden Trägerseil eingestellt. Die Seilwinde weist beispielsweise einen elektrischen Antriebsmotor auf, der die Seilwinde entsprechend antreibt. Entsprechend kann auch die weitere Seilzugvorrichtung eine elektrisch steuerbare Seilwinde aufweisen, die von der Kabeltransportvorrichtung gesteuert wird.

Somit können erfindungsgemäß eine oder mehrere elektrische Seilwinden mit dem Bedienelement gesteuert werden. Somit kann der Benutzer aufgrund der Steuerung der Seilwinden die Länge der Trägerseile individuell einstellen, so dass eine exakte Positionierung des Ladesteckers eingestellt werden kann.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.
Fig. 1 zeigt eine schematische Darstellung einer erfindungsgemäßen Vorrichtung, bei welcher das Kabeltransportelement als Steuerstange ausgebildet ist und sich ein Fahrzeug in der Ladezone befindet, gemäß einer beispielhaften Ausführungsform.
Fig. 2 zeigt eine schematische Darstellung einer erfindungsgemäßen Vorrichtung, bei welcher das Kabeltransportelement als Seilwinde ausgebildet ist und sich ein Fahrzeug in der Ladezone befindet, gemäß einer beispielhaften Ausführungsform.
Fig. 3 zeigt eine schematische Darstellung der Kabeltransportvorrichtung aufweisend zwei Seilzugvorrichtungen, wobei ein Fahrzeug in der Ladezone positioniert ist, gemäß einer beispielhaften Ausführungsform der vorliegenden Erfindung.
Fig. 4 zeigt eine schematische Darstellung der erfindungsgemäßen Vorrichtung aus Fig. 3, wobei sich in der Ladezone kein Fahrzeug befindet.

Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

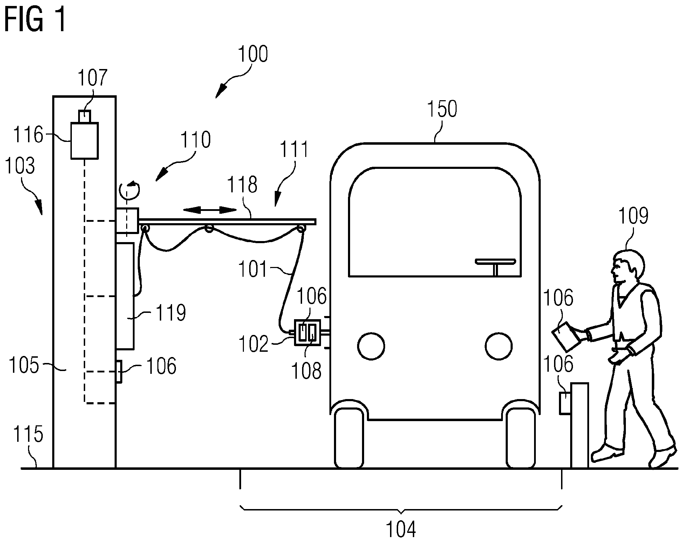

Fig. 1 zeigt eine schematische Darstellung einer erfindungsgemäßen Vorrichtung 100, bei welcher das Kabeltransportelement 111 als Steuerstange 118 ausgebildet ist und sich ein Fahrzeug 150 in der Ladezone 104 befindet. Die Vorrichtung 100 weist eine Trägerstruktur 103, welche an einer Ladezone 104 zum Laden eines Fahrzeugs 150 angeordnet ist, und ein Ladekabel 101 auf, welches an eine Elektrizitätsquelle anschließbar ist und einen Ladestecker 102 zum Anstecken an ein zu ladendes Fahrzeug 150 aufweist, wobei das Ladekabel 101 an der Trägerstruktur 103 befestigt ist. Ferner weist die Vorrichtung 100 eine Kabeltransportvorrichtung 110 mit einem Kabeltransportelement 111, welches mit dem Ladekabel 101 derart gekoppelt ist, dass das Ladekabel 101 relativ zur Trägerstruktur 103 bewegbar ist. Die Kabeltransportvorrichtung 110 weist ferner ein Bedienelement 106 auf, welches mit dem Kabeltransportelement 111 derart gekoppelt ist, dass Steuerbefehle zum Steuern des Kabeltransportelements 111 von einem Benutzer 109 eingebbar sind, um den Ladestecker 102 in der Ladezone 104 zu positionieren.

Die Trägerstruktur 103 ist beispielsweise als Trägersäule bzw. Bodenstütze 105 am Boden 115 befestigt und neben der Ladezone 104 angeordnet. Die Trägerstruktur 103 dient zum Befestigen der Vorrichtungskomponenten an einem Gebäude oder an dem Boden 115. Die Trägerstruktur 103 trägt insbesondere das Ladekabel 101. Ferner ist an der Trägerstruktur 103 die Kabeltransportvorrichtung 110 mit dem entsprechenden Kabeltransportelement 111 vorgesehen. Ferner kann das Bedienelement 106 ebenfalls an der Bodenstütze 105 befestigt sein.

Ferner ist an der Trägerstruktur 103 ein Ladeverteiler (Dispenser) 119 angeordnet, an welchem das Ladekabel 101 gekoppelt ist.

Die Kabeltransportvorrichtung 110 weist in dem dargestellten Ausführungsbeispiel eine Steuerstange 118 auf. Die Steuerstange 118 kann beispielsweise längsverstellbar ausgebildet sein und/oder derart schwenkbar an der Bodenstütze 105 angeordnet sein, dass das Ladekabel 101 in die Ladezone 104 hinein- und herausschwenkbar ist. Beispielsweise kann das Ladekabel 101 an einem oder mehreren Befestigungspunkten an die Steuerstange 118 gekoppelt werden. Zwischen den einzelnen Befestigungspunkten kann das Ladekabel 101 Schlaufen aufweisen. Ist die Steuerstange 118 beispielsweise in ihrer Länge reduziert, so sind große Schlaufen zwischen den Befestigungspunkten existent. Wenn die Steuerstange 118 zu ihrer Maximallänge ausgezogen ist, so kann das Ladekabel 101 zwischen den Befestigungspunkten nahezu gespannt vorliegen. Die Steuerstange 118 kann beispielsweise einklappbar oder teleskopartig einfahrbar ausgebildet werden. Ferner kann die Steuerstange 118 mittels eines Scharniers schwenkbar beispielsweise an der Liegestütze 105 befestigt werden, um somit das Ladekabel 101 in die Ladezone 104 hinein- oder hinauszuschwenken. Die Längenveränderung bzw. das Schwenken der Steuerstange 118 wird mittels eines elektrischen Aktuators von der Kabeltransportvorrichtung 110 gesteuert werden.

Das Bedienelement 106 stellt eine Eingabemöglichkeit bereit, so dass ein Benutzer Steuerbefehle zum Steuern des Kabeltransportelements 111 eingeben kann. Das Bedienelement 106 kann hierfür eine Vielzahl verschiedener mechanischer Eingabemöglichkeit aufweisen, wie beispielsweise Knöpfe, Schieber oder Schalter.

Die Kabeltransportvorrichtung 110 ist basierend auf den Steuerbefehlen steuerbar. Die Steuerbefehle geben beispielsweise die Seillänge des Ladekabels 101 vor oder geben Positionsdaten oder Bewegungsdaten für eine Steuermechanik des Kabeltransportelements 111 vor.

Befindet sich das Fahrzeug 150 in der Ladezone 104 und liegt der Ladestecker 102 beabstandet von dem Fahrzeug 150 vor, kann der Benutzer 109 das Bedienelement 102 betätigen, um die Kabeltransportvorrichtung 110 anzuweisen, den Ladestecker 102 in die Nähe der Ladebuchse des Fahrzeugs 150 zu bewegen bzw. zu positionieren. Nach dem Ladevorgang kann der Benutzer 109 mittels des Bedienelements 106 die Kabeltransportvorrichtung 110 entsprechend steuern, um das Ladekabel 101 bzw. den Ladestecker 102 von dem Fahrzeug 150 zu entfernen, so dass ein Ausfahren des Fahrzeugs 150 aus der Ladezone 104 bei verringertem Risiko einer Beschädigung des Ladekabels 101 erfolgen kann.

In dem gezeigten Ausführungsbeispiel ist ferner ein Bedienelement 106 an dem Ladekabel 101, insbesondere an dem Ladestecker 102 angeordnet. Somit bewegt sich das Bedienelement 106 zusammen mit den Ladestecker 102. Der Benutzer 109 kann den Ladestecker 102 greifen und diesen über das angebrachte Bedienelement 106 in seiner Position steuern. Der Benutzer 109 kann somit das Bedienelement 106 zusammen mit dem Ladestecker 101 bis zu einer gewünschten Position führen, wobei die Bewegungskräfte vollständig bzw. nahezu vollständig durch die Kabeltransportvorrichtung 110 generiert werden. Der Benutzer 109 gibt lediglich entsprechend Steuerbefehle über das Bedienungselement 106 ein.

Die Kabeltransportvorrichtung 110 weist eine Empfangseinrichtung 107 zum drahtlosen Empfangen der Steuerbefehle von dem Bedienelement 106 auf, wobei das Bedienelement 106 eine Sendeeinrichtung aufweist zum Übertragen der vom Benutzer eingegebenen Steuerbefehle zu der Empfangseinrichtung 107. Das Bedienelement 106 kann somit entfernt von der Kabeltransportvorrichtung 110 angeordnet werden. Das Bedienelement 106 kann beispielsweise in ein Smartphone eines Benutzers 109 implementiert sein.

Das Bedienelement 106 weist ferner ein Anzeigeelement 108 auf, welches konfiguriert ist, Informationen bezüglich der Ist-Position des Ladesteckers 102 anzugeben und/oder Informationen bezüglich des Ladezustands des Ladekabels 101 anzuzeigen. Insbesondere kann das Anzeigeelement 108 einen Bildschirm aufweisen, in welchem beispielsweise die Position des Ladesteckers 102 in Bezug auf die Ladezone 104 bzw. das Fahrzeug 150 dargestellt wird, insbesondere in Echtzeit. Ferner kann das Bedienelement 106 einen berührungsempfindlichen (kapazitiven oder resistiven) Bildschirm (Touchscreen) aufweisen, um Steuerbefehle von einem Benutzer 109 einzugeben.

Die Vorrichtung 100 kann ferner eine Steuereinheit 116 aufweisen, welche zum Austausch von Daten bzw. Signalen mit der Kabeltransportvorrichtung 110 und dem Bedienelement 106 gekoppelt ist. Die Steuereinheit 116 kann beispielsweise die Empfangseinrichtung 107 aufweisen, welche die Steuerbefehle von dem Bedienelement 106 empfängt und entsprechend für die Kabeltransportvorrichtung 110 verarbeitet und auch bereitstellt.

Das Bedienelement 106 kann ferner mit einer Elektrizitätsquelle bzw. einem Ladeverteiler (Dispenser) 119, zum Laden des Fahrzeugs 150 drahtlos oder drahtgebunden derart gekoppelt sein, dass Steuerbefehle zum Steuern eines Ladevorgangs mittels des Bedienelements 106 von dem Benutzer 109 eingebbar sind. Neben der Steuerfunktion der Position des Ladesteckers 101 kann das Bedienelement 106 somit ebenfalls eine Steuerfunktion bezüglich des Ladevorgangs aufweisen. Beispielsweise kann das Bedienelement 106 Steuerbefehle bezüglich des Beginns und der Beendigung eines Ladevorgangs an den Ladeverteiler 119 bzw. eine zwischengeschaltete Steuereinheit 116 senden.

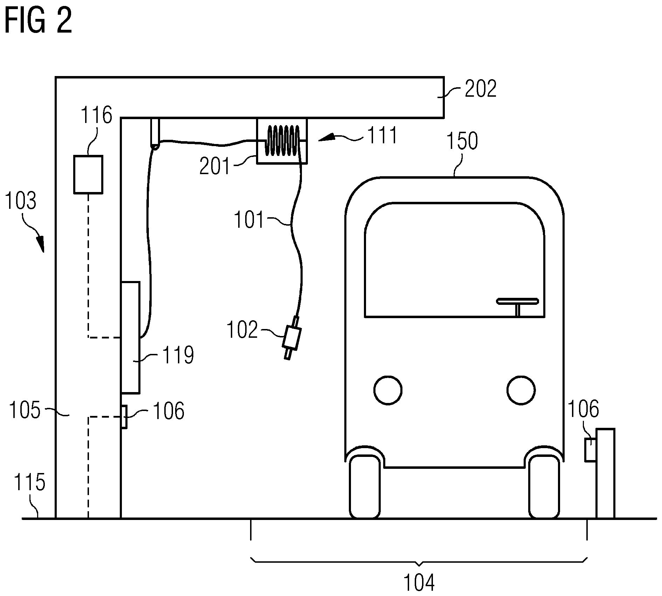

Fig. 2 zeigt eine schematische Darstellung einer erfindungsgemäßen Vorrichtung 100, bei welchem das Kabeltransportelement 111 als Seilwinde 201 ausgebildet ist und sich ein Fahrzeug 150 in der Ladezone 104 befindet. Die Vorrichtung 100 aus Fig. 2 weist ähnliche Merkmale wie die Ausführungsform aus Figur 1 auf, wobei an der Bodenstütze 105 beabstandet vom Boden 115 ein Querbalken 201 angeordnet ist, welcher sich über die Ladezone 104 erstreckt. Der Querbalken 202 weist eine ausreichende Höhe zum Boden 115 auf, so dass ein Fahrzeug 150 zum Laden unter dem Querbalken 150 positioniert werden kann.

Das Kabeltransportelement 111 ist als elektrisch antreibbare Seilwinde 201 ausgebildet, auf welcher das Ladekabel 101 aufgerollt ist, wobei das Bedienelement 106 derart konfiguriert ist, dass Steuerbefehle bezüglich Steuerung der Seilwinde 201 zum Aufrollen und Abrollen des Ladekabels 101 eingebbar sind. Steuersignale können von dem beabstandeten Bedienelement 106 auf die Seilwinde 201 übertragen werden und entsprechend das Ladekabel 101 aufgerollt oder abgerollt werden. Insbesondere ist die Seilwinde an dem Querbalken 202 montiert, welcher beabstandet vom Boden 115 quer über diesen verläuft. Entsprechend wird beim Abrollen des Ladekabels 101 der Ladestecker 102 vertikal von oben nach unten herabgelassen, bis der Benutzer 109 den Ladestecker 102 greifen und in die Ladebuchse des Fahrzeugs 150 einstecken kann.

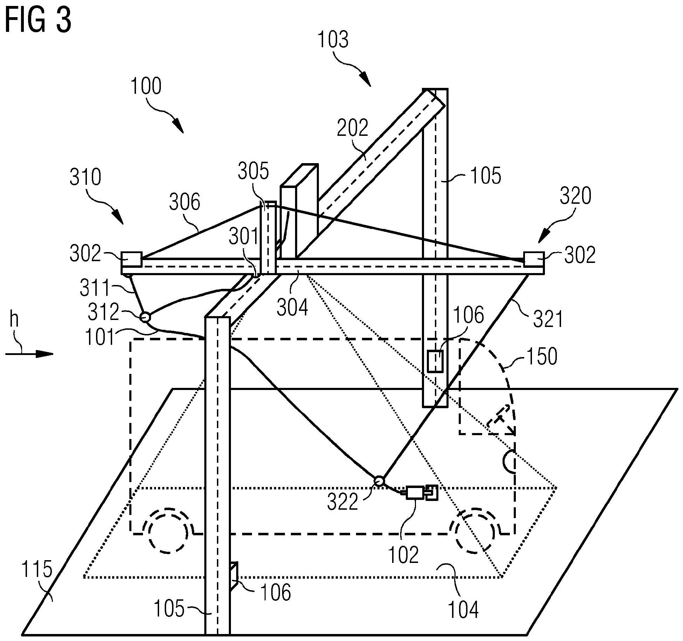

Fig. 3 zeigt eine schematische Darstellung der Kabeltransportvorrichtung 110 aufweisend zwei Seilzugvorrichtungen 310, 320, wobei ein Fahrzeug 150 in der Ladezone 140 positioniert ist.

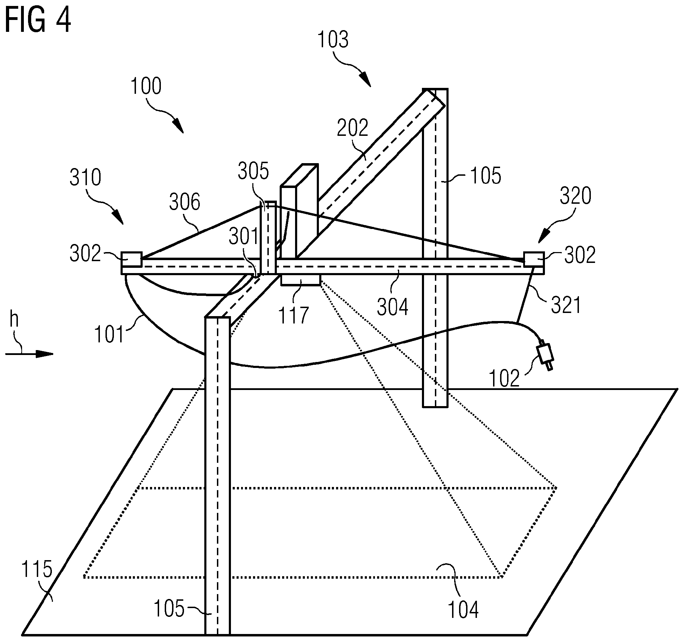

Fig. 4 zeigt eine schematische Darstellung der erfindungsgemäßen Vorrichtung 100 aus Fig. 3, wobei sich in der Ladezone 104 kein Fahrzeug 150 befindet.

Die Trägerstruktur 103 weist einen Querbalken 202 auf, an welchem eine Seilzugvorrichtung 310 und eine zweiten Seilzugvorrichtung 320 der Kabeltransportvorrichtung 110 angeordnet sind. Der Querbalken 202 ist mittels zweier Bodenstützen 105, beispielsweise aus einer Stahlkonstruktion oder aus Beton, am Boden 115 befestigt, so dass an beiden Enden des Querbalkens 202 eine entsprechende Bodenstütze 105 vorgesehen ist.

Die Trägerstruktur 103 weist einen Ausleger 304 auf, an welchem die Seilzugvorrichtung 310 und die weitere Seilzugvorrichtung 320 angeordnet sind. Der Ausleger 304 ist an dem Querbalken 202 befestigt und ragt seitlich zur Erstreckungsrichtung des Querbalkens 202 heraus. An dem Querbalken 202 können Ladekomponenten, wie beispielsweise ein Ladeverteiler (Dispenser) 119, angeordnet werden, wobei die Seilzugvorrichtungen 310, 320 beabstandet voneinander an dem Ausleger 304 befestigt sind. Der Ausleger 106 kann beispielsweise aus einem Vollmaterial bestehen oder einen Fachwerkträger darstellen.

Insbesondere ist der Ausleger 304 rechtwinklig zur der Erstreckungsrichtung des Querbalkens 104 ausgebildet. Das Fahrzeug 150 kann beispielsweise entlang einer vorbestimmten Einfahrrichtung in die Vorrichtung 100 einfahren. Der Querbalken 202 erstreckt sich beispielsweise quer zu der Einfahrrichtung, so dass das Fahrzeug 150 unter dem Querbalken 202 positioniert werden kann. Der Ausleger 304, welcher sich insbesondere rechtwinklig von dem Querbalken 202 erstreckt, verläuft somit parallel zur Einfahrrichtung und somit entlang einer Seitenfläche des positionierten Fahrzeugs 150. Die an dem Ausleger 304 beabstandet angeordneten Seilzugvorrichtungen 310, 320 verlaufen somit entlang der Seitenfläche des positionierten Fahrzeugs 150. Mittels Einstellens der Längen der entsprechenden Trägerseile 311, 312 und der Seilzugvorrichtungen 310, 320 kann somit die Position des Ladesteckers 102 entlang der Seitenflächen des Fahrzeugs 150 eingestellt werden.

Die Seilzugvorrichtung 310 weist das erste Trägerseil 311 auf, welche das Ladekabel 101 an dem ersten Aufhängepunkt 312 befestigt. Mit anderen Worten hängt das Ladekabel 101 an dem Trägerseil 311 von dem Ausleger 304 herab. Das erste Trägerseil 311 kann an dem ersten Aufhängepunkt 312 beispielsweise lösbar oder unlösbar mit dem Ladekabel 101 befestigt sein. Entsprechend ist die weitere Seilzugvorrichtung 320 mit dem weiteren Trägerseil 321 an dem Ladekabel 101 in den zweiten Aufhängepunkt 322, lösbar oder unlösbar, befestigt, so dass das Ladekabel 101 mit dem zweiten Trägerseil 321 an dem Ausleger 304 aufgehängt ist.

Jedes der Trägerseile 311, 321 kann den Abstand zwischen dem entsprechenden Aufhängepunkt 312, 322 und der Trägerstruktur 103 individuell einstellen. Bei einer Anordnung mit zwei Seilzugvorrichtungen 310, 320 verläuft das Ladekabel 101 zunächst von einem Kopplungspunkt 301 an der Trägerstruktur 103, beispielsweise immer an dem Querbalken 202 oder dem Ausleger 304 entlang, zu einer Seilzugvorrichtung 310, bzw. zu einer Kopplung an dem ersten Aufhängepunkt 312. Von dort verläuft das Ladekabel 101 zu der weiteren Seilzugvorrichtung 320, bzw. zu dem weiteren Aufhängepunkt 322 an dem weiteren Trägerseil 321. Von dem weiteren Aufhängepunkt 322 verläuft das Ladekabel 101 weiter bis zu seinem Ende, an welchen der Ladestecker 102 angeordnet ist.

Über die Einstellung der Seillängen der Trägerseile 311, 321 wird der Bodenabstand zwischen den Aufhängepunkten 312, 322 und dem Boden 115 individuell eingestellt. Somit können in einem inaktiven Zustand, in dem kein Fahrzeug 150 an der Vorrichtung 110 platziert ist (siehe Fig. 4), die Aufhängepunkte 312, 322 in Richtung Trägerstruktur 103 eingestellt werden, so dass das Ladekabel 101 bodenfern in der Nähe der Trägerstruktur 103 vorliegt. Nachdem ein Fahrzeug 150 insbesondere unter dem Querbalken 202 rangiert hat und an einer vorbestimmten Position bzw. Ladeposition relativ zur Trägerstruktur 103 positioniert ist, können die Seillängen der Trägerseile 311, 321 gezielt vergrößert werden, so dass ein Benutzer den Ladestecker 102 greifen kann und in die Ladebuchse des Fahrzeugs 115 einstecken kann (Fig. 3).

Das Ladekabel 101 ist derart konfiguriert, dass das Ladekabel 101 von dem Kopplungspunkt 301 aus zu dem ersten Aufhängepunkt 312 und anschließend zu dem zweiten Aufhängepunkt 322 verläuft, wobei das Ladekabel 101 derart an der Trägerstruktur 103, der Seilzugvorrichtung 310 und der weiteren Seilzugvorrichtung 320 angeordnet ist, dass entlang einer horizontalen Richtungskomponente h der Kopplungspunkt 301 zwischen dem ersten Aufhängepunkt 311 und dem weiteren Aufhängepunkt 322 vorliegt. Das Ladekabel 101 hängt zunächst von dem Kopplungspunkt 101 von dem Querbalken 202 der Trägerstruktur 103 herunter. Anschließend verläuft das Ladekabel 101 zu dem ersten Aufhängepunkt 312, bildet eine Schlaufe und verläuft in Gegenrichtung zu dem weiteren Aufhängepunkt 322. Der Bereich des Ladekabels 101 zwischen dem Kopplungspunkt 301 und dem weiteren Aufhängepunkt 322 bildet somit einen C-förmigen Verlauf. Der Bereich der Schlaufe am Aufhängepunkt 312 kann flexibel basierend auf den detektierten Sensordaten der Sensorvorrichtung 106 in Richtung Boden 115 verstellt werden. Entsprechend kann auch der Bereich am Ladestecker 102 bzw. am weiteren Aufhängepunkt 322 flexibel Richtung Boden 115 verstellt werden. Je nachdem, wie die Längenverhältnisse zwischen dem Tragseil 311 und dem weiteren Tragseil 312 ausgebildet sind, kann die Form des Seilverlaufs des Ladekabels 101 eingestellt werden.

Der Ausleger 304 weist zwischen zwei Auslegerenden einen Verstärkungsbalken 305 auf, welcher senkrecht nach oben, gegenüberliegend zum Boden 115, von dem Ausleger 304 hervorsteht. Ein gespanntes Verstärkungsseil 306 verbindet die Auslegerenden und den Verstärkungsbalken 305 zur Stabilisierung des Auslegers 304.

Die Seilzugvorrichtung 310 und die zweite Seilzugvorrichtung 320 weisen jeweils eine elektrische Seilwinde 302 auf. Die Seilwinden 302 können entsprechend die Trägerseile 311, 321 aufrollen und abwickeln. Die entsprechenden Seilwinden 302 können mittels der Kabeltransportvorrichtung 110 basierend auf den Sensordaten der Sensorvorrichtung 106 gesteuert werden.

Die elektrischen Seilwinden 302, welche die Länge der Trägerseile 311 steuert, können mit dem Bedienelement 106 von dem Benutzer gesteuert werden. Somit kann der Benutzer 109 eine exakte Positionierung des Ladesteckers einstellen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Unabhängig vom grammatikalischen Geschlecht eines bestimmten Begriffes sind Personen mit männlicher, weiblicher oder anderer Geschlechteridentität mit umfasst.

### Bezugszeichenliste

- 100: Vorrichtung
- 101: Ladekabel
- 102: Ladestecker
- 103: Trägerstruktur
- 104: Ladezone
- 105: Bodenstütze
- 106: Bedienelement
- 107: Empfangseinrichtung
- 108: Anzeigeelement
- 109: Benutzer
- 110: Kabeltransportvorrichtung
- 111: Kabeltransportelement

- 115: Boden
- 116: Steuereinheit
- 118: Steuerstange
- 119: Ladeverteiler
- 150: Fahrzeug
- 201: antreibbare Seilwinde für Ladekabel
- 202: Querbalken
- 301: Kopplungspunkt
- 302: Seilwinde
- 304: Ausleger
- 305: Verstärkungsbalken
- 306: Verstärkungsseil

- 310: Seilzugvorrichtung
- 311: Trägerseil
- 312: Aufhängepunkt
- 320: weitere Seilzugvorrichtung
- 321: weiteres Trägerseil
- 322: weiterer Aufhängepunkt h horizontale Richtungskomponente

## Patentansprüche

1. Vorrichtung (100) zum Transportieren eines Ladekabels (101) zum Laden eines Fahrzeugs (150), die Vorrichtung (100) aufweisend,
eine Trägerstruktur (103), welche dazu ausgebildet ist, an einer Ladezone (104) zum Laden eines Fahrzeugs (150) angeordnet zu werden,
ein Ladekabel (101), welches mit einer Elektrizitätsquelle verbunden oder verbindbar ist und einen Ladestecker (102) zum Anstecken an ein zu ladendes Fahrzeug (150) aufweist,
wobei das Ladekabel (101) an der Trägerstruktur (103) befestigt ist,
eine Kabeltransportvorrichtung (110) mit einem Kabeltransportelement (111), welches mit dem Ladekabel (101) gekoppelt und dazu ausgebildet ist, das Ladekabel (101) relativ zur Trägerstruktur (103) zu bewegen,
wobei die Kabeltransportvorrichtung (110) ferner ein Bedienelement (106) aufweist, welches mit dem Kabeltransportelement (111) gekoppelt und dazu ausgebildet ist, Steuerbefehle zum Steuern des Kabeltransportelements (111) von einem Benutzer (109) entgegenzunehmen, und wobei die Kabeltransportvorrichtung dazu ausgebildet ist, den Ladestecker (102) in der Ladezone (104) in Abhängigkeit von den entgegengenommenen Steuerbefehlen zu bewegen.

2. Vorrichtung (100) gemäß dem vorhergehenden Anspruch, wobei das Bedienelement (106) an der Trägerstruktur (103) angeordnet ist.

3. Vorrichtung (100) gemäß Anspruch 1,
wobei das Bedienelement (106) an dem Ladekabel (101), insbesondere an dem Ladestecker (102), angeordnet ist.

4. Vorrichtung (100) gemäß einem der vorhergehenden Ansprüche,
wobei die Kabeltransportvorrichtung (110) eine Empfangseinrichtung (107) zum drahtlosen Empfangen der Steuerbefehle von dem Bedienelement (106) aufweist, und
wobei das Bedienelement (106) eine Sendeeinrichtung aufweist zum Übertragen der vom Benutzer (109) eingegebenen Steuerbefehle an die Empfangseinrichtung.

5. Vorrichtung (100) gemäß dem vorhergehenden Anspruch,
wobei das Bedienelement (106) drahtlos an die Kabeltransportvorrichtung (110) zum Übertragen der Steuerbefehle koppelbar ist,
wobei das Bedienelement (106) insbesondere ein Computer, ein Smartphone und/oder ein Tablet-Computer ist.

6. Vorrichtung (100) gemäß einem der vorhergehenden Ansprüche,
wobei das Bedienelement (106) ein Anzeigeelement (108) aufweist, welches konfiguriert ist, Informationen bezüglich der Ist-Position des Ladesteckers (102) anzugeben und/oder Informationen bezüglich des Ladezustands des Ladekabels (101) anzuzeigen.

7. Vorrichtung (100) gemäß einem der vorhergehenden Ansprüche,
wobei das Bedienelement (106) mit einer Elektrizitätsquelle zum Laden des Fahrzeugs (150) drahtlos oder drahtgebunden derart koppelbar ist, dass Steuerbefehle zum Steuern eines Ladevorgangs mittels des Bedienelements (106) von dem Benutzer (109) eingebbar sind.

8. Vorrichtung (100) gemäß einem der vorhergehenden Ansprüche,
wobei Bedienelement (106) ein Piezoelement aufweist, welches konfiguriert ist, mittels Betätigung durch den Benutzer (109) ein Steuersignal, insbesondere ohne zusätzliche Energiebereitstellung, zu erzeugen.

9. Vorrichtung (100) gemäß einem der vorhergehenden Ansprüche,
wobei das Kabeltransportelement (111) eine Steuerstange (118) ausbildet, welche längsverstellbar ausgebildet ist und/oder welche derart schwenkbar ist, dass das Ladekabel (101) in die Ladezone (104) hinein- und herausschwenkbar ist,
wobei das Bedienelement (106) dazu ausgebildet ist, Steuerbefehle bezüglich eines Schwenkens und/oder bezüglich einer Länge der Steuerstange (118) entgegenzunehmen.

10. Vorrichtung (100) gemäß einem der vorhergehenden Ansprüche,
wobei das Kabeltransportelement (111) eine Seilwinde aufweist, die dazu ausgebildet ist, das Ladekabel aufzurollen oder abzurollen,
wobei das Bedienelement (106) dazu ausgebildet ist, Steuerbefehle bezüglich eines Aufrollens oder Abrollens des Ladekabels entgegenzunehmen.

11. Vorrichtung (100) gemäß einem der vorhergehenden Ansprüche,
wobei die Kabeltransportvorrichtung (110) an der Trägerstruktur (103) befestigt ist und eine Seilzugvorrichtung (310) aufweist, welche ein Trägerseil (311) als Kabeltransportelement (111) aufweist,
wobei das Trägerseil (311) zwischen einem Aufhängepunkt (312) des Ladekabels (101) und der Trägerstruktur (103) befestigt ist,
wobei die Seilzugvorrichtung (310) dazu ausgebildet ist, eine freie Länge des Trägerseils (311) einzustellen, so dass ein Abstand des ersten Aufhängepunkts (312) zu einem Boden (115) variabel vorgebbar ist,
wobei das Bedienelement (106) mit der Seilzugvorrichtung (310) gekoppelt und dazu ausgebildet ist, Steuerbefehle bezüglich der freien Länge des Trägerseils (311) entgegenzunehmen.

12. Vorrichtung (100) gemäß dem vorhergehenden Anspruch,
wobei die Kabeltransportvorrichtung (110) eine weitere Seilzugvorrichtung (320) aufweist, welche ein weiteres Trägerseil als Kabeltransportelement (111) aufweist,
wobei die weitere Seilzugvorrichtung (320) an der Trägerstruktur (103) beabstandet von der Seilzugvorrichtung (310) befestigt ist,
wobei das weitere Trägerseil (321) zwischen einem weiteren Aufhängepunkt (322) des Ladekabels (101), welcher beabstandet von dem Aufhängepunkt (312) ausgebildet ist, und der Trägerstruktur (103) befestigt ist,
wobei die Seilzugvorrichtung (310) und die weitere Seilzugvorrichtung (320) jeweils dazu ausgebildet sind, die freien Längen des Trägerseils (311) und des weiteren Trägerseils (321) unabhängig voneinander einzustellen, so dass ein jeweiliger Abstand des Aufhängepunkts (312) und des weiteren Aufhängepunkts (322) zum Boden (115) variabel vorgebbar ist, wobei das Bedienelement (106) mit der weiteren Seilzugvorrichtung (320) gekoppelt und dazu ausgebildet ist, Steuerbefehle bezüglich der freien Länge des weiteren Trägerseils (321) entgegenzunehmen.

13. Verfahren zum Transportieren eines Ladekabels (101) zum Laden eines Fahrzeugs (150) mit einer Vorrichtung (100) gemäß einem der vorhergehenden Ansprüche, das Verfahren wenigstens aufweisend einen Schritt des Positionierens des Ladesteckers (102) in der Ladezone (104) basierend auf von dem Bedienelement (106) entgegengenommenen Steuerbefehlen zum Steuern des Kabeltransportelements (111).
